Europäisches Patentamt

European Patent Office

Office européen des brevets

(11) Veröffentlichungsnummer: **0 381 789 B1**

## EUROPÄISCHE PATENTSCHRIFT

(45) Veröffentlichungstag der Patentschrift: **20.04.94**

(21) Anmeldenummer: **89102066.1**

(22) Anmeldetag: **07.02.89**

(51) Int. Cl.⁵: **H02P 7/622**, H02M 5/257

(54) **Verfahren und Vorrichtung zur Steuerung von ein- oder mehrphasigen Wechselstromstellern.**

(43) Veröffentlichungstag der Anmeldung:
**16.08.90 Patentblatt 90/33**

(45) Bekanntmachung des Hinweises auf die
Patenterteilung:
**20.04.94 Patentblatt 94/16**

(84) Benannte Vertragsstaaten:
**AT CH DE FR GB IT LI SE**

(56) Entgegenhaltungen:
**EP-A- 0 113 951**
**WO-A-84/02404**
**GB-A- 2 084 359**

(73) Patentinhaber: **SIEMENS AKTIENGESELL-
SCHAFT
Wittelsbacherplatz 2
D-80333 München(DE)**

(72) Erfinder: **Doerwald, B. Claus
Gablonzer Strasse 3
D-8552 Höchstadt(DE)**
Erfinder: **Runggaldier, Diethard
Amselweg 5
D-8602 Stegaurach(DE)**

**Beschreibung**

Die Erfindung bezieht sich auf Verfahren und eine Vorrichtung zur Steuerung von ein- oder mehrphasigen Wechselstromstellern durch Phasenanschnittsteuerung von Halbleiter-Ventilen.

Zur Regelung der in einem Wechselstromnetz einer elektrischen Last zugeführten Leistung werden Wechselstromsteller verwendet, die durch Phasenanschnittsteuerung von Halbleiter-Ventilen gesteuert werden. Insbesondere beim Betrieb eines Wechselstrommotors erfordern wechselnde Betriebsbedingungen, wie z.B. unterschiedliche Belastungen des Motors während Start- oder Verzögerungsphasen beim Ein- und Ausschalten eine Regelung der dem Motor zugeführten Leistung, um das Netz und den Motor vor unnötigen Belastungen zu schützen. Dabei ist für eine Regelung der dem Motor zugeführten Leistung die Bestimmung des Phasenwinkels zwischen der Spannung und dem Strom erforderlich.

Aus der britischen Patentschrift 2 084 359 ist eine Vorrichtung zur Steuerung eines Wechselstrommotors bekannt, bei der ein beispielsweise durch Unterbelastung des Motors hervorgerufener ungünstiger Leistungsfaktor verbessert werden soll. Dazu sind dem Motor für jede Versorgungsphase steuerbare Halbleiter-Ventile, insbesondere ein Triac oder eine antiparallele Thyristorschaltung zugeordnet, die über Phasenanschnittsteuerung eine von den aktuellen Betriebsbedingungen des Motors abhängige Leistungszufuhr ermöglichen. Eine Verbesserung des Leistungsfaktors wird bei dieser bekannten Vorrichtung dadurch erreicht, daß in einer Steuereinrichtung der Phasenunterschied zwischen Strom und Spannung für jede Phase detektiert und durch eine entsprechende Vergrößerung des Zündwinkels, d.h. des Zeitraums, der zwischen dem Stromnulldurchgang und dem Zündzeitpunkt für die jeweilige Phase verstreicht, verringert wird.

Als Zeitreferenz für die Ermittlung des Zündzeitpunkts wird bei der bekannten Vorrichtung der Zeitpunkt des Stromnulldurchganges verwendet, der durch Messung der über dem Triac anliegenden Spannung ermittelt wird. Diese Spannung wird einem Komparator zugeleitet, dessen Ausgangszustände den Schaltzuständen dieses Triacs entsprechen. Der Stromnulldurchgang korrespondiert dann zu einer Flanke des Ausgangssignals des Komparators, aus der mit Hilfe eines Monoflops ein Abtastimpuls für eine mit dem Nulldurchgang der Versorgungsspannung synchronisierte Rampenspannung erzeugt wird. Der abgetastete Wert der Rampenspannung wird von einer extern über ein Potentiometer eingegebenen Referenzspannung subtrahiert und auf den invertierenden Eingang eines Differenzverstärkers gegeben, dessen Ausgangsspannung zusammen mit der Rampenspannung einem weiteren Komparator zugeführt wird, der über einen nachgeschalteten Triggerpulsgenerator ein primäres Zündsignal erzeugt, wenn die Rampenspannung die Ausgangsspannung des Differenzverstärkers überschreitet. Durch diese Schaltung wird somit die Phasenverschiebung zwischen Motorstrom und Motorspannung und somit der Leistungsfaktor auf einen Wert stabilisiert, der durch die am Potentiometer eingestellte Referenzspannung gegeben ist.

Anstelle der analogen Bestimmung des Phasenwinkels mittels einer mit der Netzspannung synchronisierten Rampenspannung ist auch eine digitale Messung des Phasenwinkels mit Hilfe eines Zählers bekannt. Beim Nulldurchgang der Spannung wird der Zähler gestartet und beim Nulldurchgang des Stromes gestoppt. Der Inhalt des Zählers entspricht dem Phasenwinkel und kann für eine Steuerung des Leistungsfaktors des Motors weiter verwendet werden. Der Zündwinkel wird dabei so lange variiert, bis der aktuelle gemessene Phasenwinkel mit dem gewünschten Phasenwinkel übereinstimmt (US-A-4 361 792).

Dabei hat sich gezeigt, daß der gemessene Phasenwinkel aufgrund von Störungen, die sowohl der Spannung als auch dem Strom aufgeprägt sind, von Periode zu Periode schwankt. Diese Schwankungen des gemessenen Phasenwinkels übertragen sich dann bei den bekannten Einrichtungen auf den Zündwinkel und verursachen ein instabiles Regelverhalten das beispielsweise bei der Regelung von Motoren zu einem unruhigen und instabilen Motorlauf führt.

Der Erfindung liegt somit die Aufgabe zugrunde, ein Verfahren zur Steuerung von ein- oder mehrphasigen Wechselstromstellern anzugeben, bei dem die von Periode zu Periode auftretenden Schwankungen bei der Messung des Phasenwinkels nicht zu einem instabilen Regelverhalten führen. Außerdem soll eine Vorrichtung zur Durchführung des Verfahrens angegeben werden.

Die genannten Aufgaben werden jeweils gelöst mit den Merkmalen des Anspruches 1 bzw. 5. Der Erfindung liegt dabei die Erkenntnis zugrunde, daß im wesentlichen die Fluktuation des Spannungsnulldurchganges für die Schwankungen bei der Messung des Phasenwinkels und für die dadurch verursachte Instabilität des Regelverhaltens verantwortlich sind.

Die Erfindung beruht dabei auf der Überlegung, bei der Bestimmung des Phasenwinkels nicht nur die aktuellen Meßwerte für den Spannungs- und den Stromnulldurchgang zu berücksichtigen, sondern bei der Berechnung des Phasenwinkels einen Referenzzeitpunkt heranzuziehen, der aus den vorangegangenen Meßwerten für die Spannungsnulldurchgänge gebildet wurde. Dieser Referenzzeitpunkt stimmt somit mit dem aktuellen Zeitpunkt für den Spannungsnulldurchgang nicht überein und ist von dessen statistischen Schwankungen unabhängig.

Die Berücksichtigung der Meßwerte für die vorangegangenen Spannungsnulldurchgänge ermöglicht die Berechnung stabiler Erwartungswerte für die folgenden Spannungsnulldurchgänge, die je nach zugrundeliegendem Algorithmus weitgehend unabhängig von kurzfristigen, statistischen Schwankungen der Zeitpunkte der wahren Spannungsnulldurchgänge sind. Diese statistischen Schwankungen sind in der Regel von Störungen hervorgerufen, die der Netzspannung überlagert sind, so daß das vorliegende Verfahren einer digitalen Netzfilterung entspricht.

Um langfristigen Schwankungen der Netzfrequenz Rechnung zu tragen, ist es von Vorteil, den Referenzzeitpunkt aus dem vorangegangenen Referenzzeitpunkt durch Addition einer berechneten Periodendauer zu ermitteln, die durch Addition eines Korrekturwertes zur vorhergehenden berechneten Periodendauer berechnet wird. Das Vorzeichen dieses Korrekturwertes stimmt dabei mit dem Vorzeichen der Differenz zwischen dem Meßwert für den Zeitpunkt des Spannungsnulldurchgangs und dem für den vorangegangenen Spannungsnulldurchgang ermittelten Referenzzeitpunkt überein.

Der Korrekturwert kann dabei konstant oder in Abhängigkeit dieser ermittelten Referenz variabel sein. Der Korrekturwert ist dabei vorzugsweise sehr viel kleiner als die zu korrigierende berechnete Periodendauer, um die Schwankungen des Spannungsnulldurchganges von einer Periode zur anderen gering zu halten.

Bei einer vorteilhaften Vorrichtung zur Steuerung von ein- oder mehrphasigen Wechselstromstellern gemäß dem erfindungsgemäßen Verfahren ist die Verwendung eines Mikroprozessors vorgesehen, der eine flexible Anpassung des Algorithmus für die Berechnung des Phasenwinkels an unterschiedliche Einsatzbedingungen ermöglicht.

Zur weiteren Erläuterung der Erfindung wird auf die Zeichnung verwiesen, in deren

Figur 1

eine Vorrichtung zur Durchführung des Verfahrens gemäß der Erfindung in einem Blockschaltbild veranschaulicht ist. Anhand der in

Figuren 2 bis 5

dargestellten Zeitdiagramme wird das erfindungsgemäße Verfahren näher erläutert.

Figur 6

zeigt eine vorteilhafte Ausgestaltung einer erfindungsgemäßen Vorrichtung, deren Funktionsweise mit Hilfe des in

Figur 7

dargestellten Zeitdiagramms erklärt wird. Anhand des in

Figur 8

gezeigten Flußdiagrammes wird eine vorteilhafte Ausgestaltung eines für die Berechnung eines Referenzzeitpunktes geeigneten Algorithmus näher erläutert.

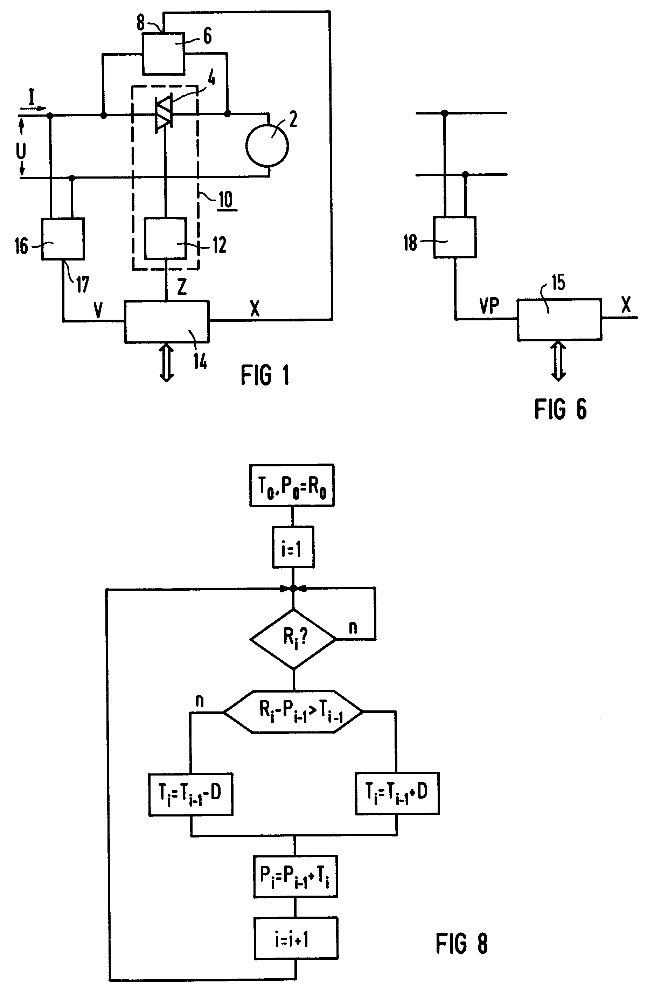

Entsprechend Figur 1 ist eine Last, insbesondere ein Motor 2 über ein Halbleiter-Ventil 4, beispielsweise ein Triac oder eine Schaltung aus mehreren Halbleiter-Ventilen, beispielsweise eine Thyristorschaltung an die Phase eines einphasigen Wechselstromnetzes angeschlossen. Das Halbleiter-Ventil 4 ist mit einer Steuerelektrode 5 versehen und Teil einer Zündeinrichtung 10 die den für das Halbleiter-Ventil 4 erforderlichen Zündverstärker 12, beispielsweise einen optoelektronischen Zündverstärker oder einen Zündtransformator, enthält. Anstelle eines elektrisch gezündeten Halbleiter-Ventiles 4 kann auch ein optisch gezündetes Halbleiter-Ventil vorgesehen sein.

Die Steuerung des Halbleiter-Ventiles 4 erfolgt durch Phasenanschnitt- oder Zündeinsatzsteuerung. An die Steuerelektrode 5 wird hierzu in Abhängigkeit von der Phasenlage ein Zündsignal angelegt, das eine Zündung des Halbleiter-Ventils 4 hervorruft. Dem Halbleiter-Ventil 4 ist in der bevorzugten Ausführungsform gemäß der Figur ein Stromnulldurchgangs-Detektor 6 zugeordnet, mit dem der Stromnulldurchgang des im Stromkreis fließenden Stromes I über den Spannungsabfall am Halbleiter-Ventil 4 erfaßt wird. Der Stromnulldurchgang dient sowohl zur Festlegung einer Zeitreferenz für die Phasenanschnittsteuerung als auch für die Bestimmung des Phasenwinkels. Ein entsprechendes Stromnulldurchgangssignal X wird am Ausgang 8 des Stromnulldurchgangs-Detektors 6 bereitgestellt. Der Stromnulldurchgangs-Detektor 6 enthält hierzu beispielsweise einen Komparator, der den Absolutwert des Spannungsabfalles über dem Halbleiter-Ventil 4 mit einem vorgegebenen Schwellwert vergleicht.

Am Ausgang 8 steht somit ein Spannungsnulldurchgangssignal X mit zwei Pegeln an. Mit dem einen Pegel wird dabei ein Zustand erfaßt, der zu einem Strom gehört, der kleiner ist als ein dem Schwellwert zugehöriger Grenzwert. Bei entsprechender niedriger Wahl dieses Schwellwertes, beispielsweise etwa 10 V, entspricht dann dieser Pegel im wesentlichen Strom Null und das Stromnulldurchgangssignal X gibt im wesentlichen die Schaltzustände des Halbleiter-Ventils 4 wieder. Die Flanken zwischen diesen beiden Schaltzuständen fallen dann wenigstens annähernd zeitlich mit dem Stromnulldurchgang des durch das Halbleiter-Ventil 4 fließenden Stromes I zusammen.

Zur Messung der Spannungsnulldurchgänge ist ein Spannungsnulldurchgangs-Detektor 16 vorgesehen, an dessen Ausgang 17 ein binäres Spannungsnulldurchgangssignal V ansteht, dessen Flanken in Analogie zum Stromnulldurchgangssignal X zeitlich mit den Spannungsnulldurchgängen zusammenfällt.

Der Ausgang 8 des Stromnulldurchgangs-Detektors 6 und der Ausgang 17 des Spannungsnulldurchgangs-Detektors 16 ist mit einer Steuereinrichtung 14 verbunden, die aus dem Stromnulldurchgangssignal X ein entsprechend einem vorgegebenen Zündwinkel zeitverzögertes Zündsignal Z ableitet und an den Zündverstärker 12 weitergibt.

Die Steuereinrichtung 14 ermittelt aus den Spannungs- und Stromnulldurchgangssignalen V bzw. X den Phasenwinkel, der dann beispielsweise durch eine Veränderung der Zündwinkel auf einen extern eingegebenen Sollwert eingestellt werden kann.

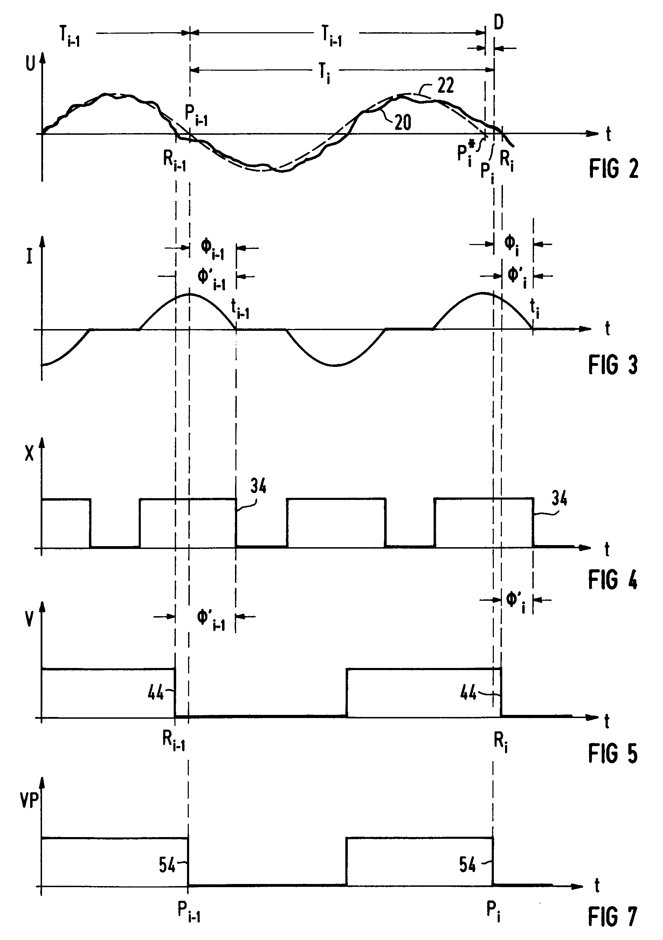

Gemäß Figur 2 ist die Netzspannung U gegen die Zeit aufgetragen. Der Netzspannung sind entsprechend der Figur Störungen aufgeprägt, die eine Abweichung des wahren Kurvenverlaufes 20 von dem in der Figur gestrichelt gezeichneten idealen Kurvenverlaufes 22 bewirken. Die Zeitpunkte für die wahren Spannungsnulldurchgänge sind in der Figur mit $R_{i-1}$ und $R_i$ bezeichnet.

Der über den Halbleiter-Ventil fließende Strom I ist in Figur 3 ebenfalls gegen die Zeit aufgetragen. Der Strom I löscht zum Zeitpunkt $t_{i-1}$ und zündet bei einem Zündwinkel, der im Beispiel der Figur etwa 60° beträgt, erneut.

Dem Strom ist entsprechend Figur 4 ein Stromnulldurchgangssignal X mit zwei Pegeln zugeordnet, dessen einer Pegel einem fließenden Strom und dessen anderer Pegel dem Strom Null entspricht. Durch die abfallende Flanke 34 werden die Zeitpunkte $t_{i-1}$ und $t_i$ erfaßt, in denen der Strom I löscht.

In analoger Weise werden die Nulldurchgänge des zeitlichen Verlaufes der Spannung U mit einem Spannungsnulldurchgangssignal V entsprechend Figur 5 erfaßt. Das Spannungsnulldurchgangssignal V hat entsprechend Figur 5 ebenfalls zwei Pegel, die durch Flanken voneinander getrennt sind. Gemäß dem Beispiel der Figur korrespondieren die abfallenden Flanken 44 zu den wahren Nulldurchgängen der Spannung zu den Zeitpunkten $R_{i-1}$ und $R_i$ bei dem ein Vorzeichenwechsel von plus nach minus auftritt.

Zum wahren Spannungsnulldurchgang zum Zeitpunkt $R_{i-1}$ und zum wahren Stromnulldurchgang zum Zeitpunkt $t_{i-1}$ gehört ein Phasenwinkel $\phi'_{i-1}$. Dieser Phasenwinkel $\phi'_{i-1}$ wird dadurch ermittelt, daß zum Zeitpunkt $R_{i-1}$ durch die abfallende Flanke 44 des Spannungsnulldurchgangssignals V ein Zähler gestartet wird, dessen Inhalt zum Zeitpunkt $t_{i-1}$ bei Auftreten der abfallenden Flanke 34 des Stromnulldurchgangssignals X gelesen wird.

Der nächste wahre Spannungsnulldurchgang erfolgt zum Zeitpunkt $R_i$. Zu diesem Spannungsnulldurchgang korrespondiert der Stromnulldurchgang zum Zeitpunkt $t_i$.

Aufgrund von Störungen, die der Spannung überlagert sind, erfolgen im Beispiel der Figur 2 die wahren Spannungsnulldurchgänge bei den Zeitpunkten $R_{i-1}$ und $R_i$ früher bzw. später als die Spannungsnulldurchgänge des gemittelten zeitlichen Spannungsverlaufes. Diese Schwankungen bewirken, daß die zu den wahren Nulldurchgängen gehörenden Phasenwinkel $\phi'_{i-1}$ und $\phi'_i$ erheblich schwanken können. Gemäß der Erfindung ist deshalb vorgesehen, bei der Bestimmung der Phasenwinkel Zeitpunkte $P_{i-1}$ und $P_i$ zugrundezulegen, die aus den vorhergehenden Spannungsnulldurchgängen errechnet sind. Diese Phasenwinkel sind in Figur 3 mit $\phi_{i-1}$ bzw. $\phi_i$ bezeichnet.

Im Beispiel der Figur 2 stimmt zufällig der berechnete Spannungsnulldurchgang für den Zeitpunkt $P_{i-1}$ mit dem Spannungsnulldurchgang des gemittelten zeitlichen Verlaufes der Spannung überein. Ausgehend von diesem Referenzzeitpunkt $P_{i-1}$ wird ein Referenzzeitpunkt $P_i$ für den nächsten Spannungsnulldurchgang durch Addition einer berechneten Periodendauer $T_i$ ermittelt. Diese berechnete Periodendauer $T_i$ ist um den Korrekturwert D größer als die vorangegangene berechnete Periodendauer $T_{i-1}$, wenn der wahre Spannungsnulldurchgang später erfolgt als ein mit Hilfe des Referenzzeitpunktes $P_{i-1}$ und der berechneten Periodendauer $T_{i-1}$ errechneter vorläufiger Referenzzeitpunkt $P_i^*$. Im umgekehrten Falle wird $T_i$ durch Subtraktion eines Korrekturwertes D von der vorangegangenen berechneten Periodendauer $T_{i-1}$ ermittelt.

Der Absolutbetrag des Korrekturwertes D kann beispielsweise auch vom Absolutbetrag der Zeitdifferenz $R_i - P_i^*$ abhängig sein. Der Korrekturwert D sollte betragsmäßig sowohl sehr viel kleiner als die berechnete Periodendauer $T_i$ als auch deutlich kleiner als die aufgrund der Spannungsschwankungen zu erwartende Schwankungsbreite der Spannungsnulldurchgänge sein. Der Figur 3 ist dann zu entnehmen, daß die mit Hilfe der Referenzzeitpunkte $P_{i-1}$ und $P_i$ ermittelten Phasenwinkel $\phi_{i-1}$ und $\phi_i$ deutlich geringer schwanken als die zu den aktuellen Nulldurchgängen gehörenden wahren Phasenwinkel $\phi'_{i-1}$ und $\phi'_i$.

Die zur Berechnung der Referenzzeitpunkte $P_i$ und der Phasenwinkel $\phi_i$ erforderlichen Schritte werden dabei vorzugsweise in der Steuereinrichtung 14 ausgeführt, die hierfür geeignete Mittel, beispielsweise einen Mikroprozessor enthält.

In einer besonderen Ausgestaltung der Erfindung kann auch gemäß Figur 6 eine Referenz-Einrichtung 18 vorgesehen sein, welche die Spannungsnulldurchgänge erfaßt und an ihrem Ausgang ein Referenzsignal VP für die Referenzzeitpunkte $P_i$ entsprechend Figur 7 bereitstellt, dessen abfallende Flanken 54 zeitlich mit den Referenzzeit-

punkten $P_{i-1}$ und $P_i$ zusammenfallen. Dieses Referenzsignal VP kann dann beispielsweise bei entsprechend kompatibler Signalgestaltung einer bekannten Steuereinrichtung 15 anstelle eines unkorrigierten Spannungsnulldurchgangssignales V zugeleitet werden. Die zur Berechnung der Referenzzeitpunkte erforderlichen Schritte werden somit bereits in der Referenz-Einrichtung 18, die beispielsweise einen single chip microcontroller enthält, durchgeführt.

Für die Ermittlung der Referenzzeitpunkte $P_i$ geeignete Verfahrensschritte sind anhand des Flußdiagrammes gemäß Figur 8 näher erläutert. Beim Start des Motors wird der erste wahre Spannungsnulldurchgang $R_o$ als erster Referenzzeitpunkt $P_o$ gesetzt. Die erste berechnete Periodendauer $T_o$ ist beispielsweise durch die Netzfrequenz vorgegeben. Beim Auftreten eines wahren Spannungsnulldurchganges $R_i$ wird eine Abfrage erzeugt, anhand der verglichen wird, ob der wahre Spannungsnulldurchgang $R_i$ früher oder später erfolgt als der mit Hilfe des vorangegangenen Referenzzeitpunktes $P_{i-1}$ und des der vorhergehenden berechneten Periodendauer $T_{i-1}$ vorläufig errechnete Referenzzeitpunkt $P_i^*$. In Abhängigkeit von diesem Ergebnis wird die neue berechnete Periodendauer $T_i$ durch Bildung einer Differenz oder einer Summe mit dem Korrekturwert D ermittelt und der neue Referenzzeitpunkt $P_i$ als Summe aus dieser berechneten Periodendauer $T_i$ und dem Referenzzeitpunkt $P_{i-1}$ ermittelt. Dieser Referenzzeitpunkt $P_i$ dient dann als Grundlage für die Ermittlung des Phasenwinkels $\phi_i$.

Bei der Steuerung von mehrphasigen Wechselstromstellern ist es von Vorteil der Bestimmung des Phasenwinkels $\phi_i$ einen aus Zeitpunkten für mehrere, in verschiedenen Phasen erfolgende Stromnulldurchgänge gebildeten Mittelwert zugrunde zulegen. Dazu kann beispielsweise bei einem dreiphasigen System ausgehend von einem Zeitpunkt $t_{i,A}$ des Stromnulldurchganges in der Phase A der Zeitpunkt des nächsten Stromnulldurchganges, der beispielsweise zum Zeitpunkt $t_{i,C}$ in der Phase C stattfindet, und der Zeitpunkt $t_{i,B}$ des darauffolgenden Stromnulldurchganges, der dann in der Phase B erfolgt, gemessen werden. Aus diesen gemessenen Zeitpunkten $t_{i,A}$ $t_{i,B}$ und $t_{i,C}$ kann dann mit Hilfe einer Korrektur T, die einem Winkel von 60° entspricht, ein gemittelter Zeitpunkt $t_i = (t_{i,A} + t_{i,B} - 2T + t_{i,C} - T)/3$ errechnet werden und der Bestimmung des Phasenwinkels $\phi_i$ zugrundegelegt werden. In einem Dreiphasensystem ohne Nulleiter ist außerdem zu beachten, daß der Bestimmung des Spannungsnulldurchganges eine Spannungsdifferenz zwischen zwei Phasen, beispielsweise A und B zugrundeliegt, so daß der mit dieser Spannungsdifferenz gemessene Zeitpunkt $R_{i,AB}$ für den wahren Spannungsnulldurchgang je nach Drehsinn

um $\pm$ T/2 korrigiert werden muß, um den zur Ermittlung des für die Bestimmung des Phasenwinkels $\phi_i$ erforderlichen Zeitpunkt $R_i$ zu erhalten.

## Patentansprüche

1. Verfahren zur Steuerung von ein- oder mehrphasigen Wechselstromstellern durch Phasenanschnittsteuerung von Halbleiter-Ventilen (4) , bei dem zur Regelung des Leistungsfaktors ein Phasenwinkel ($\phi_i$) durch Messung der zwischen den Spannungs- und Stromnulldurchgängen auftretenden Zeitdifferenz bestimmt wird, **dadurch gekennzeichnet,** daß

   a) als Spannungsnulldurchgang zum Bestimmen des Phasenwinkels ($\phi_i$) jeweils ein Referenzzeitpunkt ($P_i$) ermittelt wird, der durch Addition einer berechneten Periodendauer ($T_i$) zu einem vorangegangenen Referenzzeitpunkt ($P_{i-1}$) erhalten wird,
   wobei
   b) die berechnete Periodendauer ($T_i$) durch eine Korrektur der vorhergehenden berechneten Periodendauer ($T_{i-1}$) mit einem Korrekturwert (D) erhalten wird und das Vorzeichen dieses Korrekturwertes (D) mit dem Vorzeichen der Differenz zwischen dem Meßwert für den Zeitpunkt ($R_i$) des wahren Spannungsnulldurchganges und dem als vorangegangenem Spannungsnulldurchgang ermittelten Referenzzeitpunkt ($P_{i-1}$) übereinstimmt.

2. Verfahren zur Steuerung von ein- oder mehrphasigen Wechselstromstellern nach Anspruch 1, **dadurch gekennzeichnet,** daß der Korrekturwert (D) sehr viel kleiner als die berechnete Periodendauer ($T_i$) ist.

3. Verfahren zur Steuerung von mehrphasigen Wechselstromstellern nach einem der vorhergehenden Ansprüche, **dadurch gekennzeichnet,** daß der Bestimmung des Phasenwinkels ($\phi_i$) ein aus Zeitpunkten für mehrere, in verschiedenen Phasen erfolgende Stromnulldurchgänge gebildeter Mittelwert zugrundegelegt wird.

4. Vorrichtung zur Durchführung des Verfahrens gemäß einem der vorhergehenden Ansprüche mit

   a) einem Stromnulldurchgangs-Detektor (6) für jede Phase zum Messen der Zeitpunkte ($t_i$) der Stromnulldurchgänge und Ableiten eines entsprechenden Stromnulldurchgangssignals (X)
   und

b) einem Spannungsnulldurchgang-Detektor (16) für jede Phase zum Messen der Zeitpunkte ($R_i$) der wahren Spannungsnulldurchgänge und Ableiten eines entsprechenden Spannungsnulldurchgangssignals (V) sowie

c) einer mit jedem Stromnulldurchgangs-Detektor (6) und jedem Spannungsnulldurchgangs-Detektor (16) verbundenen Steuereinrichtung (14), die zum Ermitteln der Referenzzeitpunkte ($P_i$) und zum Bestimmen des Phasenwinkels ($\phi_i$) für jede Phase sowie zum Bereitstellen eines in Abhängigkeit vom Phasenwinkel ($\phi_i$) zeitlich verzögerten Zündsignals (Z) für das entsprechende Halbleiter-Ventil (4) vorgesehen ist.

5. Vorrichtung zur Durchführung des Verfahrens gemäß einem der Ansprüche 1 bis 3 mit

a) einem Stromnulldurchgangs-Detektor (6) für jede Phase zum Messen der Zeitpunkte ($t_i$) der Stromnulldurchgänge und Ableiten eines entsprechenden Stromnulldurchgangssignals (X),

b) einer Referenz-Einrichtung (18) für jede Phase zum Messen der Zeitpunkte ($R_i$) der wahren Spannungsnulldurchgänge,zum Ermitteln der Referenzzeitpunkte ($P_i$) und zum Ableiten eines entsprechenden Referenzsignals (VP) für diese Referenzzeitpunkte ($P_i$) und

c) einer mit jedem Stromnulldurchgangs-Detektor (6) und jeder Referenz-Einrichtung (18) verbundenen Steuereinrichtung (15) zum Bestimmen des Phasenwinkels ($\phi_i$) und Bereitstellen eines in Abhängigkeit vom Phasenwinkel ($\phi_i$) zeitlich verzögerten Zündsignals (Z) für das entsprechende Halbleiter-Ventil (4).

**Claims**

1. A method for controlling a single-phase or multi-phase a.c. power controller through phase control of semi-conductor valves (4), in which for regulating the power factor a phase angle ($\phi_i$) is determined by measuring the time difference occurring between the voltage zero crossings and current zero crossings, characterised in that

(a) a reference time ($P_i$) is in each case established as a voltage zero crossing for determining the phase angle ($\phi_i$), which is obtained by adding a calculated period ($T_i$) to a preceding reference time ($P_{i-1}$), wherein

(b) the calculated period ($T_i$) is obtained by correction of the preceding calculated period ($T_{i-1}$) with a correction value (D) and the sign of this correction value (D) corresponds to the sign of the difference between the measured value for the time ($R_i$) of the true voltage zero crossing and the reference time ($P_{i-1}$) detected as a preceding zero voltage crossing.

2. A method for controlling single-phase or multiphase a.c. power controllers according to claim 1, characterised in that the correction value (D) is much smaller than the calculated period ($T_i$).

3. A method for controlling multi-phase a.c. power controllers according to one of the preceding claims, characterised in that the determining of the phase angle ($\phi_i$) is based on an average value formed from times for several zero current crossings occurring in different phases.

4. A device for carrying out the method according to one of the preceding claims with

(a) a zero current crossing detector (6) for each phase for measuring the times ($t_i$) of the zero current crossings and deriving a corresponding zero current crossing signal (X) and

(b) a voltage zero crossing detector (16) for each phase for measuring the times ($R_i$) of the true voltage zero crossings and deriving a corresponding voltage zero crossing signal (V) as well as

(c) a control device (14) connected to each zero current crossing detector (6) and each voltage zero crossing detector (16), which is provided for establishing the reference times ($P_i$) and for determining the phase angle ($\phi_i$) for each phase as well as for preparing an ignition signal (Z) delayed in time in dependence on the phase angle ($\phi_i$) for the corresponding semi-conductor valve (4).

5. A device for carrying out the method according to one of claims 1 to 3 with

(a) a zero current crossing detector (6) for each phase for measuring the times ($t_i$) of the zero current crossings and deriving a corresponding zero current crossing signal (X),

(b) a reference device (18) for each phase measuring the times ($R_i$) of the true voltage zero crossings, for establishing the reference times ($P_i$) and for deriving a corresponding reference signal (VP) for these reference times ($P_i$) and

(c) a control device (15) connected to each current zero crossing detector (6) and each reference device (18) for determining the phase angle ($\phi_i$) and preparing an ignition signal (Z) delayed in time, in dependence on the phase angle ($\phi_i$) for the corresponding semi-conductor valve (4).

**Revendications**

1. Procédé de commande de régulateurs de puissance à courant alternatif monophasés ou polyphasés, par commande par coupe de soupapes électriques (4) à semi-conducteurs, dans lequel, pour régler le facteur de puissance, un angle de phase ($\phi_i$) est déterminé par mesure de la différence de temps apparaissant entre le passage par zéro de la tension et le passage par zéro du courant, caractérisé en ce que,

   a) en tant que passage par zéro de la tension, pour déterminer l'angle de phase ($\phi_i$), on détermine un instant de référence ($P_i$), qui est obtenu par addition d'une durée de période ($T_i$) calculée, et d'un instant de référence précédent,
   du type dans lequel,
   b) la durée de période calculée ($T_i$) est obtenue par une correction de la durée de période calculée précédente ($T_{i-1}$) avec une valeur de correction (D) et le signe de cette valeur de correction (D) concorde avec le signe de la différence entre la valeur de mesure pour l'instant ($R_i$) du passage par zéro de la tension et l'instant de référence ($P_{i-1}$) déterminé en tant que passage précédent par zéro de la tension.

2. Procédé de commande de régulateurs de puissance à courant alternatif monophasé ou polyphasé, caractérisé en ce que la valeur de correction (D) est très inférieure à la durée de période ($T_i$) calculée.

3. Procédé de commande de régulateurs de puissance à courant alternatif polyphasé suivant l'une des revendications précédentes, caractérisé en ce que, pour la détermination de l'angle de phase ($\phi_i$), on prend pour base une valeur moyenne formée à partir des instants de plusieurs passages par zéro du courant s'effectuant dans différentes phases.

4. Dispositif pour la mise en oeuvre du procédé conforme à l'une des revendications précédentes comportant

   a) un détecteur (6) de passage par zéro du courant pour chaque phase, pour mesurer les instants ($t_i$) des passages par zéro du courant et pour dériver un signal (X) correspondant de passage par zéro du courant, et
   b) un détecteur (16) de passage par zéro de la tension pour chaque phase, pour mesurer les instants ($R_i$) des réels passages par zéro de la tension et pour dériver un signal (V) correspondant de passage par zéro de la tension, ainsi que
   c) un dispositif de commande (14), qui est relié à chaque détecteur (6) de passage par zéro du courant et à chaque détecteur (16) de passage par zéro de la tension et qui est prévu pour déterminer les instants de référence ($P_i$), et pour déterminer l'angle de phase ($\phi_i$) pour chaque phase, ainsi que pour établir un signal de sécurité (Z), retardé temporellement en fonction de l'angle de phase ($\phi_i$), pour la soupape électrique concernée (4) à semi-conducteurs.

5. Dispositif pour la mise en oeuvre du procédé conforme à l'une des revendications 1 à 3 comportant

   a) un détecteur (6) de passage par zéro du courant pour chaque phase, pour mesurer les instants ($t_i$) des passages par zéro du courant et pour dériver un signal (X) correspondant de passage par zéro du courant,
   b) un dispositif de référence (18) pour chaque phase, pour mesurer les instants ($Ri$) des réels passages par zéro de la tension, pour déterminer les instants de référence ($P_i$) et pour dériver un signal de référence (VP) correspondant pour ces instants de référence ($P_i$), et
   c) un dispositif de commande (15) relié à chaque détecteur (6) de passage par zéro du courant et à chaque dispositif de référence (18), pour déterminer l'angle de phase ($\phi_i$) et pour établir un signal de sécurité (Z), retardé temporellement en fonction de l'angle de phase ($\phi_i$), pour la soupape électrique (4) correspondante à semi-conducteurs.

FIG 1

FIG 6

FIG 8

FIG 2

FIG 3

FIG 4

FIG 5

FIG 7